# FASCICULE DE BREVET EUROPEEN

(11) **EP 0 990 848 B1**
(45) Date de publication et mention de la délivrance du brevet: **21.05.2003**
(21) Numéro de dépôt: 99430023.4
(22) Date de dépôt: 27.09.1999
(51) Int. Cl.: F23L 15/02, F23G 7/06

(54) **Procédé d'épuration thermique de gaz et incinérateur thermique régénératif**
Verfahren zum thermischen Reinigen von Gasen und regenerative thermische Verbrennungsvorrichtung
Process for thermal gas purification and regenerative thermal incinerator

(30) Priorité: 29.09.1998 FR 9812407
(43) Date de publication de la demande: 05.04.2000
(73) Titulaire: ENTREPRISE GENERALE DE CHAUFFAGE INDUSTRIEL PILLARD, 13272 Marseille Cédex 08 (FR)
(72) Inventeur: Pillard, Jean Claude, 13008 Marseille (FR); Russo, Luigi, 13008 Marseille (FR); Pizant, Jacques, 13190 Allauch (FR)
(74) Mandataire: Domange, Maxime

(56) Documents cités:
- EP-A- 0 548 630
- EP-A- 0 587 064
- EP-A- 0 697 562
- GB-A- 2 053 452
- US-A- 5 589 142
- US-A- 5 730 945

## Description

La présente invention a pour objet un procédé d'épuration thermique de gaz chargé de particules combustibles et un incinérateur thermiques de composés organiques volatils à travers des lits de matériau régénératif selon la préambule de la revendication 1. Un tel procédé et incinérateur sont connus du document US-A-5 730 945.

Le domaine technique de l'invention est celui de la construction d'appareil à combustion.

L'application principale de l'invention est la réalisation d'épurateur thermique permettant d'incinérer les particules combustibles qui peuvent être présentes dans le gaz ou l'air en sortie de conduit de ventilation ou d'extraction dans des usines utilisant des solvants dégraissants tel qu'imprimerie, chimie..., et qui sont constituées essentiellement de composés organiques volatils : pour cela il est connu et même imposé par certaines législations nationales, qui exigent à présent de ne plus pouvoir rejeter dans l'atmosphère de tels composés organiques (qui sont en effet généralement polluants et qui peuvent dans certains domaines industriels représenter plus d'1 % du gaz rejeté par les dites industries), de porter ce gaz à haute température, c'est à dire au moins 800 °C pendant 0,5 à 2 secondes selon le type de composés organiques considérés ; une telle température pendant ce temps déterminé permet en effet de réaliser une oxydation thermique totale des éléments organiques avant le rejet du gaz dans l'atmosphère.

Il est donc nécessaire pour chauffer ainsi ce gaz chargé, de lui fournir un apport énergétique assez important, cet apport étant d'autant plus gaspillé qu'il faut chauffer toute la masse de gaz, soit 99 % de gaz pur. On utilise pour cela, en général, un combustible de type gaz ou fuel, ou même de l'énergie électrique : cet apport énergétique coûte assez cher en frais d'exploitation et tous les constructeurs de tels incinérateurs ont cherché des moyens de réduire cet apport afin de diminuer le coût d'exploitation du procédé de traitement par incinération. Parmi les moyens connus, on peut citer :
- l'utilisation d'un catalyseur permettant d'obtenir une oxydation catalytique complète à une température plus basse, soit en dessous des 800 °C, ce qui réduit d'autant la nécessité d'apport calorifique extérieur mais cette technique est délicate et nécessite de régénérer ou de remplacer périodiquement le catalyseur qui est assez coûteux.
- l'utilisation de la chaleur contenue dans les fumées de combustion pour préchauffer la masse de gaz chargée des particules que l'on veut brûler afin de porter celles-ci à une température aussi haute que possible et de diminuer alors ensuite l'apport calorifique extérieur nécessaire pour atteindre les 800 C° Pour obtenir un tel préchauffage plusieurs techniques sont ainsi utilisées :
   * la première dite "récupératrice" consiste à utiliser un ou plusieurs échangeurs thermiques placés dans le conduit d'évacuation des fumées de combustion et à l'intérieur desquels on fait circuler le gaz chargé avant combustion ; cette technique nécessite cependant toujours un apport calorifique extérieur assez important tel que par un brûleur de combustible et cela même si, pour éviter le gaspillage énergétique, on dispose d'un deuxième échangeur récupérateur permettant de produire alors de l'eau chaude, de la vapeur ou un autre fluide thermique : cependant un tel système complique bien sûr les installations, et ne réduit pas la consommation de combustible d'appoint, et est surtout inutile s'il n'y a pas de besoins de chauffer un tel fluide annexe ;
   * la deuxième technique connue de préchauffage de la masse de gaz, dite "régénératrice" et dans laquelle se situe la présente invention, consiste à chauffer un lit de matière (en général en matériaux réfractaires ou céramiques) par les fumées de combustion pendant que le gaz chargé est préchauffé par le passage dans un deuxième autre lit de matière identique monté en parallèle et en amont avec le premier ; on inverse ensuite les deux circuits et la matière, qui a stocké l'énergie dans un premier temps la restitue ainsi à l'air chargé, dans un deuxième temps ; cette technique nécessite cependant, comme cela est décrit dans l'ouvrage de Pierre LE CLOIREC sur "les composés organiques volatils (COV) dans l'environnement" édité par l'Ecole des Mines de Nantes (Lavoisier TEC DOC édition 1998), un troisième lit de matière monté en série parallèle avec les deux autres : en effet, si l'on se contente d'inverser les circuits entre deux lits de matière, une fraction du gaz n'a pas pu traverser complètement celui où il devait être chauffé et est alors chassé en sens inverse et rejeté sans avoir atteint la température d'oxydation nécessaire, limitant l'efficacité de purification à 95 % maximum. Cependant une telle installation à trois "lits", qui permet d'espérer atteindre cent pour cent en purification, est plutôt complexe du fait de la nécessité de tripler les circuits et d'avoir de multiples vannes de gros diamètre de l'ordre de 200 à 1 000 mm suivant les débits : les installations utilisant de telles techniques sont donc assez volumineuses ; de plus elles ne permettent pas vraiment d'atteindre les cent pour cent car on n'est pas vraiment sûr, en sortie d'un premier lit accumulateur restituant la chaleur, que toutes les particules à épurer seront brûlées avant de traverser le deuxième lit accumulateur : en effet celui-ci en absorbant les calories de l'air chauffé par le premier lit empêche une combustion totale des particules si celles-ci n'ont pas eu le temps d'être brûlées dans la chambre de combustion séparant les deux "lits" concernés à cause du faible volume de cette chambre.

Le problème posé est ainsi de pouvoir réaliser des incinérateurs thermiques régénératifs de composés organiques volatils à travers des lits de matériaux et dans lesquels :
- on puisse obtenir une très haute efficacité d'épuration sans être obligé de multiplier le nombre de chambres à lits accumulateurs,
- l'apport d'énergie calorifique extérieur est réduit au minimum en utilisant au mieux l'énergie de combustion des particules de composés organiques que l'on y incinère ;
- le volume et l'encombrement au sol sont minimum avec un accès aisé aux lits accumulateurs afin de pouvoir changer le matériau qui s'y trouve ou tout au moins le nettoyer.

Une solution au problème posé est un procédé d'épuration thermique de gaz ou d'air chargé de particules combustibles et utilisant deux chambres d'épuration régénératrices contenant chacune un lit accumulateur de chaleur tel qu'on injecte alternativement à travers un premier lit accumulateur préalablement chauffé, le gaz ou l'air chargé de particules pour brûler celles ci, lequel gaz ou air ainsi chauffé et épuré étant alors envoyé à travers un deuxième lit accumulateurs auquel il cède ses calories avant d'être évacué, puis quand cet autre lit accumulateur est lui-même suffisamment chauffé, on inverse les circuits et le rôle des deux dits accumulateurs ; selon l'invention on effectue l'épuration complète du gaz chargé résiduel de la première chambre d'épuration comprenant ledit premier accumulateur après fermeture de l'alimentation en gaz chargé à épurer vers ladite première chambre d'épuration, en effectuant les étapes suivantes dans lesquelles :
- on stocke dans un réservoir tampon à paroi mobile du gaz en sortie desdites chambres d'épuration qui peut être :
   - Soit le gaz chargé résiduel en sortie dudit premier accumulateur, ledit gaz chargé stocké dans ledit réservoir tampon étant ensuite injecté dans ledit deuxième accumulateur après ou simultanément à l'inversion des circuits d'alimentation en gaz chargé et des rôles des deux dits accumulateurs,
   - soit une partie du gaz épuré en sortie dudit deuxième accumulateur que l'on stocke dans une première chambre, à paroi mobile dudit réservoir ainsi que le gaz chargé à épurer que l'on envoie dans une deuxième chambre à paroi mobile dudit réservoir tampon, ledit gaz épuré stocké dans ledit réservoir tampon étant ensuite injecté dans ledit premier accumulateur, avant l'inversion des circuits d'alimentation en gaz chargé et des rôles des deux dits accumulateurs.

On comprend que ladite partie du gaz épuré en sortie dudit deuxième accumulateur est stocké en cours de cycle d'incinération dans ladite première chambre d'épuration tandis que le gaz chargé à épurer est stocké dans ladite deuxième chambre à paroi mobile dudit réservoir tampon seulement après fermeture de l'alimentation en gaz chargé à épurer de ladite première chambre d'épuration.

Plus précisément, dans un premier mode de réalisation particulier :
(a) on stocke dans un réservoir tampon une partie du gaz épuré en sortie du dit deuxième lit accumulateur auquel il a cédé ses calories,
(b) on ferme l'arrivée du gaz chargé à épurer vers lesdits accumulateurs,
(c) on injecte ledit gaz épuré et stocké dans le réservoir tampon à travers ledit premier accumulateur ayant permis de chauffer le gaz chargé de particules de telle sorte que le gaz chargé résiduel qui s'y trouve en soit chassé, chauffé à la température voulue et épuré, et
(d) on inverse les circuits d'alimentation en gaz chargé et en gaz épuré entre les deux dits accumulateurs afin d'inverser le rôle de ceux ci.

Dans ce premier mode de réalisation lorsque l'on ferme l'arrivée du gaz à épurer vers les chambres d'épuration, on envoie de préférence ce gaz à épurer dans une deuxième chambre dudit réservoir tampon dont ladite paroi mobile la sépare d'une première chambre dans laquelle a été stocké le gaz déjà épuré et qui en est ainsi chassé simultanément.

Dans un deuxième mode de réalisation du procédé selon l'invention on effectue les étapes suivantes en fin de cycle d'incinération dans ladite première chambre d'épuration :
(a) on ferme l'arrivée du gaz chargé à épurer vers ledit premier accumulateur,
(b) on stocke dans ledit réservoir tampon à paroi mobile le gaz chargé résiduel dudit premier accumulateur et,
(c) on injecte ledit gaz chargé résiduel stocké vers ledit deuxième accumulateur après ou simultanément à l'inversion des circuits d'alimentation en gaz chargé et inversion des rôles entre les deux dits accumulateurs de telle sorte que ledit gaz chargé résiduel soit chauffé à la température voulue et épuré.

Dans ce deuxième mode de réalisation le réservoir tampon peut ne comprendre qu'une seule chambre à paroi mobile.

Dans un mode préférentiel de ce deuxième mode de réalisation, après fermeture de l'arrivée du gaz chargé à épurer de l'étape (a) on effectue les étapes suivantes :
(a1) on inverse les circuits d'alimentation en gaz chargé et les rôles entre les deux dits accumulateurs,
(b1) on stocke dans ledit réservoir tampon, après ou simultanément à l'étape (a1), le gaz en sortie dudit premier accumulateur comprenant en premier lieu du gaz chargé résiduel dudit premier accumulateur jusqu'à ce que du gaz épuré en sortie dudit premier accumulateur commence à arriver dans ledit réservoir, et
(c1) on ferme alors l'alimentation dudit réservoir tampon et on évacue le gaz épuré en sortie dudit premier accumulateur vers une cheminée d'évacuation et
(d1) on injecte, après ou simultanément à l'étape (c1), ledit gaz chargé résiduel stocké dans ledit réservoir vers ledit deuxième accumulateur.

La présente invention fournit également un incinérateur thermique de gaz chargé de particules combustibles comportant deux chambres d'épuration régénératrices contenant chacune un lit accumulateur de chaleur, et reliées d'une part entre elles et d'autre part alternativement au circuit d'alimentation dudit gaz chargé de particules à épurer et à celui d'évacuation du gaz une fois épuré caractérisé en ce qu'il comprend un réservoir tampon à paroi mobile relié alternativement soit au circuit d'évacuation soit au circuit d'alimentation desdites chambres d'épuration.

Dans une variante de réalisation d'un incinérateur thermique selon l'invention utile pour la mise en oeuvre du procédé d'épuration thermique de l'invention dans lequel on stocke dans une première chambre du réservoir tampon une partie du gaz épuré et dans une deuxième chambre du réservoir tampon le gaz chargé à épurer après fermeture de l'alimentation en gaz chargé à épurer vers ledit premier accumulateur, ledit réservoir tampon comprend deux chambres séparées par une paroi mobile et dont la première reçoit du gaz épuré depuis le circuit d'évacuation pour le réinjecter ensuite dans le circuit d'alimentation, et la deuxième reçoit simultanément, quand le gaz épuré est chassé de l'autre chambre, du gaz chargé de particules depuis le circuit d'alimentation auquel elle est reliée en amont de la liaison avec l'autre chambre.

Dans une variante de réalisation de l'incinérateur thermique de l'invention utile notamment pour la mise en oeuvre du procédé d'épuration thermique de l'invention dans lequel on stocke le gaz chargé résiduel en sortie dudit premier accumulateur, ledit réservoir comprend une seule chambre qui reçoit du gaz chargé résiduel depuis le circuit d'évacuation desdites chambres d'épuration pour l'injecter ensuite dans le circuit d'alimentation desdites chambres d'épuration.

Dans les deux variantes de réalisation de l'incinérateur thermique, ledit réservoir tampon est avantageusement un gazomètre dans lequel ladite paroi mobile est une cloche renversée dans la partie inférieure du réservoir contenant du liquide assurant l'étanchéité d'une chambre définie par l'intérieur de ladite cloche au-dessus dudit liquide.

Ledit réservoir peut être un réservoir fermé de sorte que ladite cloche délimite les deux dites première et deuxième chambres du réservoir respectivement à l'intérieur et à l'extérieur de ladite cloche.

Ledit réservoir peut également être un réservoir ouvert dans sa partie supérieure de sorte que ladite cloche délimite une seule chambre à l'intérieur de ladite cloche.

Dans un mode préférentiel de réalisation d'une installation d'épuration selon l'invention ledit réservoir tampon est apte à stoker un volume de gaz au moins égal à celui d'une chambre d'épuration.

De préférence encore l'incinérateur de l'invention comporte des chambres d'épuration de forme cylindrique verticale comportant une partie basse en dessous du lit accumulateur de chaleur et dans laquelle le gaz à épurer est injecté pour traverser ledit lit accumulateur, et une partie haute au-dessus de ce lit accumulateur ; lesquelles parties hautes sont reliées entre elles par un conduit désaxé par rapport au plan défini par les axes desdites chambres, l'ensemble de cette partie haute et du conduit de liaison constituant la chambre de combustion où sont brûlées les particules de combustible.

Chacune desdites chambres comporte dans sa partie haute une cloison horizontale située au-dessus dudit conduit et traversée par une buse désaxée également par rapport à l'axe de la chambre ; laquelle buse étant inclinée par rapport à ladite cloison horizontale de telle façon que son orifice débouchant au-dessus de celle ci soit dirigé dans la direction d'enroulement, autour dudit axe de la chambre, définie par l'orifice du conduit de liaison entre les chambres pour que le gaz ou l'air qui circule dans les parties hautes de celles ci y soit entraîné en tourbillonnant dans le même sens entre chaque orifice de buse et du conduit de liaison.

Du fait de l'efficacité de la chambre de combustion et d'épuration telle que définie ci-dessus et précisée dans l'exemple de réalisation décrit dans les figures ci-jointes, les chambres d'épuration ainsi que le réservoir tampon qui peut également être de forme cylindrique verticale ont des dimensions optimales permettant d'en réduire l'encombrement extérieur, et sont alignés sur un châssis commun constituant un ensemble compact.

Le résultat est un nouveau type d'installation d'incinérateurs thermiques de particules telles que les composés organiques volatils que l'on peut trouver dans les fumées, le gaz ou l'air en sortie de différentes usines, lesquels incinérateurs répondent au problème posé sans avoir les inconvénients des dispositifs connus tels que ceux cités précédemment. En effet, le fait de ne disposer que de deux chambres d'épuration au lieu des trois tel que c'est le cas dans les installations de même type conçues à ce jour, pour obtenir une efficacité proche de 100 %, permet bien entendu de simplifier celles ci et d'en réduire l'encombrement et les coûts de fabrication puisqu'en particulier, le nombre de vannes peut être réduit par exemple de moitié par rapport au nombre de celles nécessaires dans un ensemble à trois chambres d'épuration. Ayant également un volume de chambre en moins, on réduit les pertes calorifiques de l'ensemble de l'installation.

De plus du fait que l'installation ne comprend que deux chambres d'épuration et que celles-ci ont un rôle absolument symétrique, cela permet de mieux diriger et contrôler la circulation de l'air entre les deux chambres suivant les caractéristiques particulières de la présente invention : une telle circulation permet en sortie de chaque lit accumulateur une meilleure homogénéisation du mélange gazeux et d'assurer un parcours d'une durée minimale avant le deuxième lit accumulateur permettant une combustion complète des particules ; on peut également disposer un brûleur d'appoint à l'entrée de chaque buse qui est un passage obligé du gaz afin que si celui ci n'est pas à la température de 800°C nécessaire à la totale combustion des composés organiques, on puisse apporter l'appoint calorifique nécessaire.

Ladite seconde variante de réalisation de l'incinérateur selon l'invention utile dans le procédé dans lequel on stocke le gaz chargé résiduel en sortie dudit premier accumulateur, le réservoir peut ne contenir qu'une seule chambre à paroi mobile. Ainsi le coût et l'encombrement du réservoir tampon sont diminués de moitié. En outre sur le plan du procédé on a à gérer une seule chambre dans le réservoir tampon ce qui simplifie la réalisation du procédé.

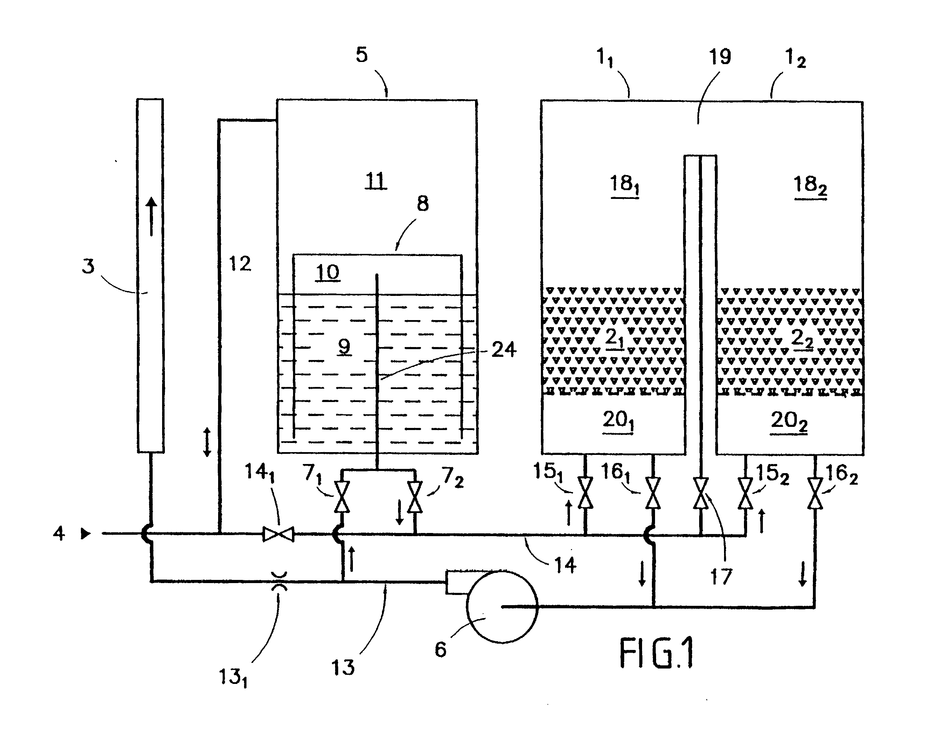

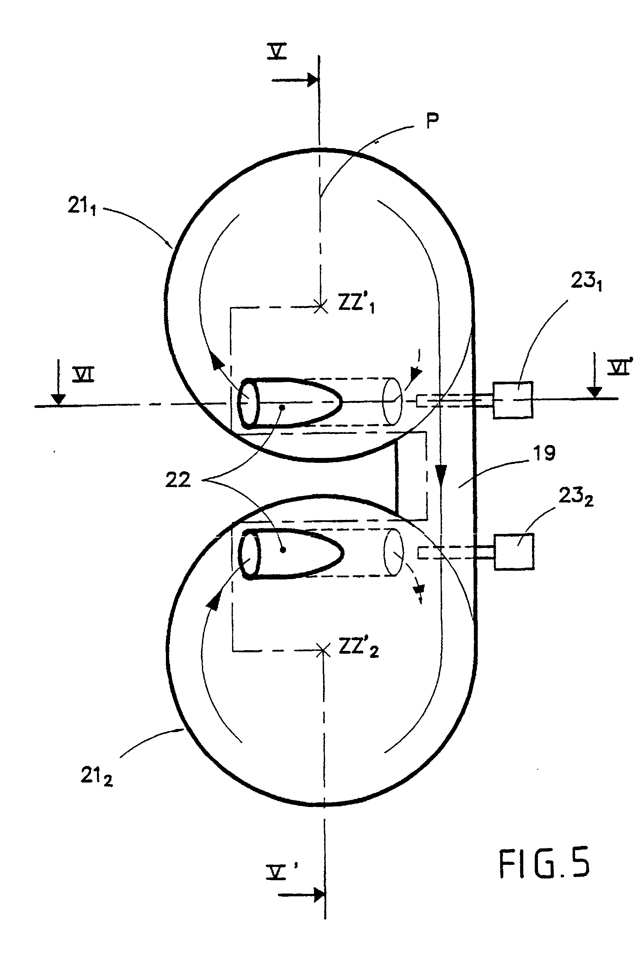

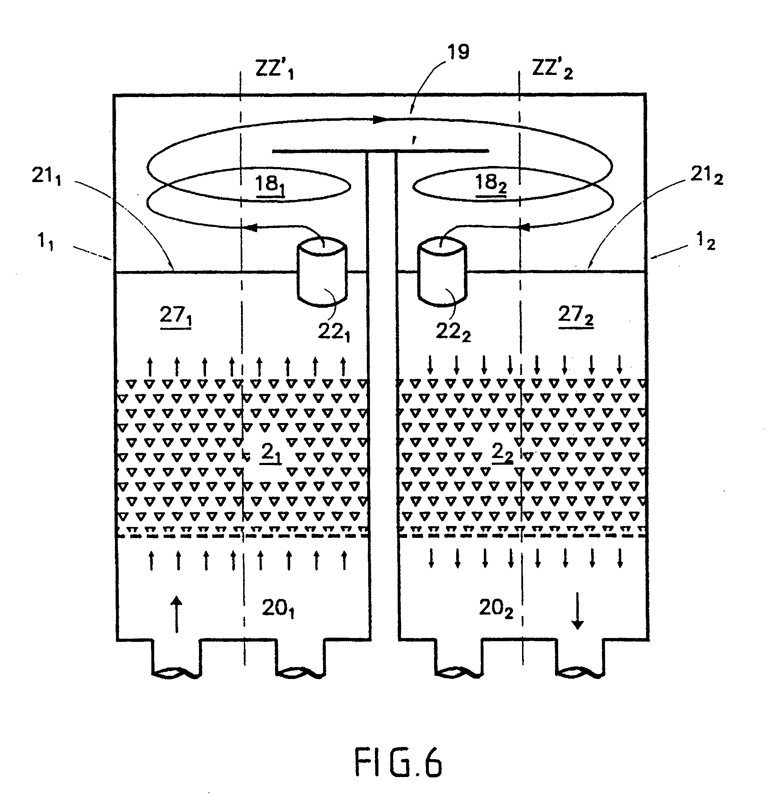

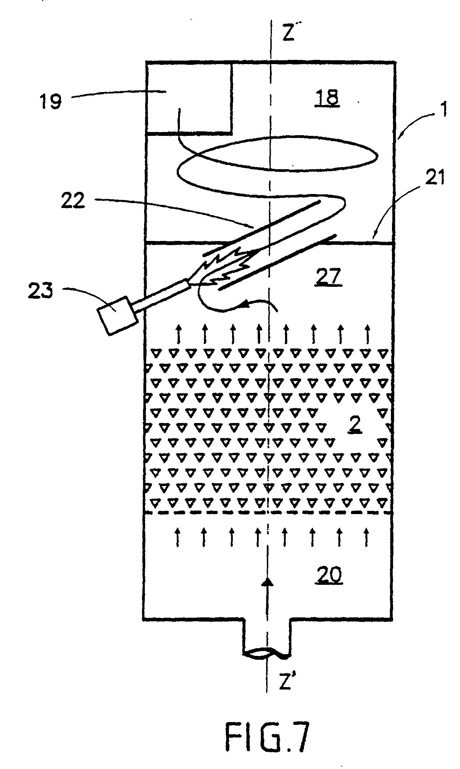

D'autres caractéristiques et avantages de la présente invention apparaîtront à la lecture de la description détaillée qui va suivre, faite en référence aux figures 1 à 7.

D'autres réalisations ou des modes de fabrication particuliers des chambres décrites ci-après sont possibles, dans le cadre de cette invention, en particulier en assurant une accessibilité très aisée par le dessus des chambres d'épuration grâce à leur disposition spécifique qui permet une ouverture totale sans technique particulière et qui n'est du reste pas représentée dans les figures jointes.

La figure 1 est une vue latérale, en coupe simplifiée suivant I,I' de la figure 2, d'une installation d'incinération selon l'invention.

La figure 2 est une vue en coupe plus précise d'un réservoir tampon tel que représenté sur la figure 1, et comprenant deux chambres à paroi mobile.

La figure 3 est une vue schématique d'une installation d'incinération mettant en oeuvre un procédé dans lequel on utilise un réservoir tampon comprenant une seule chambre à paroi mobile.

La figure 4 est une vue du dessus d'une installation d'incinération selon l'invention telle que représentée sur les figures 1 et 3 et pouvant être montée sur un châssis commun.

La figure 5 est une vue de dessus d'un mode de réalisation particulier des deux chambres d'épuration selon l'invention.

La figure 6 est une vue en coupe suivant V,V' de la figure 5.

La figure 7 est une vue en coupe d'une chambre d'épuration suivant VI, VI' de la figure 5.

L'incinérateur thermique d'épuration du gaz ou d'air chargé de particules combustibles comporte d'une manière connue, et tel que décrit dans de nombreuses publications antérieures dont celle citée en introduction et qui ne nécessite donc pas plus d'explication de son mode de fonctionnement que celle indiquée dans la présente description, deux chambres 1 d'épuration régénératrices contenant chacune un lit de matériau accumulateur de chaleur 2, lequel matériau pouvant être de la céramique, tel que :
- on injecte alternativement à travers un lit accumulateur 2 préalablement chauffé le gaz ou l'air chargé de particules pour brûler celles ci,
- lequel gaz ou air ainsi chauffé et épuré est alors envoyé à travers l'autre lit accumulateur auquel il cède ses calories avant d'être évacué 3, 13,
- puis quand cet autre lit accumulateur est lui-même suffisamment chauffé, on inverse les circuits et le rôle des deux dits accumulateurs.

Ces deux lits accumulateurs de chaleur constitués de remplissage céramique fonctionnent en mode cyclique. Un lit est comparativement chaud et sert à chauffer le gaz entrant à la température de réaction appropriée, tandis que le second refroidit le gaz purifié. Le lit le plus chaud se refroidit tandis que le lit le plus froid se réchauffe. Entre les deux lits un espace vide est dimensionné pour fournir le temps de séjour nécessaire à la réaction complète. Lorsque les températures relatives des deux lits se sont inversées la direction du débit de gaz est inversée de manière à ce que l'air contaminé entre dans le lit fraîchement chauffé tandis que le gaz chaud purifié entre dans la partie dudit lit refroidit.

Une faible quantité d'énergie complémentaire peut être introduite dans le système via un brûleur placé dans l'espace vide entre les deux lits. En outre, on peut injecter du gaz combustible dans le gaz entrant. Le remplissage céramique joue le rôle de réacteur et d'accumulateur d'énergie.

Dans la suite de la description on citera préférentiellement comme gaz à épurer et épuré, l'air.

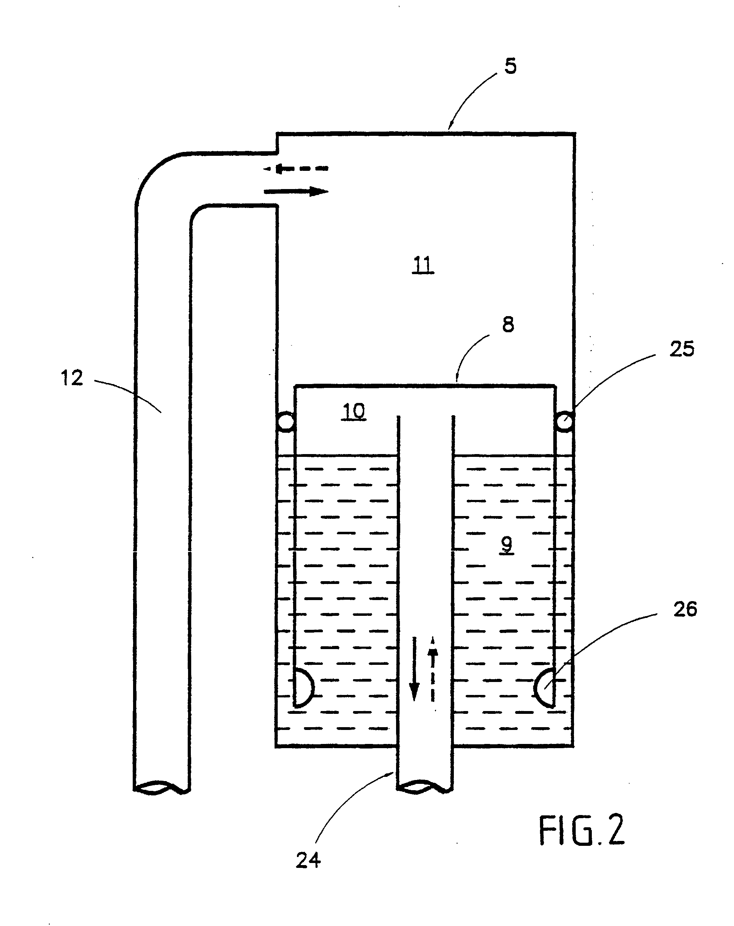

Dans un premier mode de réalisation représenté sur les figures 1 et 2 l'incinérateur d'épuration thermique comprend un réservoir tampon 5 relié également et alternativement soit au circuit d'évacuation 13 pendant la phase d'épuration de l'air à travers lesdites chambres 1 d'épuration soit au circuit d'alimentation 14 avant l'inversion d'une chambre sur l'autre de l'alimentation de l'air à épurer et de l'évacuation de l'air épuré.

Ledit réservoir tampon 5 comprend deux chambres 10, 11 séparées par une paroi mobile 8 et dont l'une 10 reçoit de l'air épuré depuis le circuit d'évacuation 13 pour le réinjecter ensuite dans le circuit d'alimentation 14, et l'autre chambre 11 reçoit simultanément, quand l'air épuré est chassé de l'autre chambre 10, l'air chargé de particules depuis le circuit d'alimentation 14 auquel elle est reliée en amont de la liaison 7₂ de l'autre chambre 10.

Ledit réservoir tampon est apte à stocker un volume d'air qui est au moins égal à celui d'une chambre 1 d'épuration et qui est renvoyé, avant inversion, dans l'incinérateur de façon à ce que ce dernier ne contienne plus que de l'air épuré au moment de l'inversion entre les deux chambres 1 qui le constituent, ce qui évite ainsi un rejet ponctuel de particules combustibles telles que les composés organiques volatils, à l'atmosphère.

Suivant le mode de représentation des figures 1 et 2 ledit réservoir tampon 5 est un gazomètre dans lequel ladite paroi mobile 8 est une cloche à joint hydraulique renversée dans la partie inférieure du réservoir 5 contenant du liquide 9, assurant l'étanchéité entre lesdites chambres 10, 11, ladite cloche renversée 8 est guidée latéralement par des patins de guidage 25 anti-frottement contre les parois du réservoir 5 et comporte à sa partie inférieure un flotteur périphérique 26 compensant son poids. L'alimentation et l'évacuation du gaz épuré dans la chambre 10 située sous la cloche 8 peuvent être effectuées soit par un seul conduit 24 ou par deux conduits séparés, l'un relié à travers une vanne 7₁ au circuit d'évacuation 13 et l'autre par une vanne 7₂ au circuit d'alimentation 14.

Le procédé d'épuration thermique selon l'invention est alors tel que :
- pendant le cycle d'incinération, par exemple dans la chambre d'épuration 1₁ par ouverture de la vanne 15₁ depuis le circuit d'alimentation 14, les particules combustibles sont brûlées dans le lit accumulateur 2₁ préchauffé et, dans la chambre de combustion 18₁ qui doit donc être maintenue à 800°C au moins ; l'air est envoyé ensuite dans là chambre de combustion 18₂ puis il cède ses calories au lit accumulateur 2₂ avant d'être évacué de la chambre d'épuration 1₂, par la vanne 16₂ ouverte dans le circuit d'évacuation 13 grâce à une pompe aspirante refoulante de circulation 6 vers une cheminée d'extraction 3 ; pendant ce cycle une partie de l'air épuré est dérivé du circuit d'évacuation 13 par l'ouverture de la vanne 7₁ dans la chambre 10 du réservoir tampon 5, qui peut donc être un gazomètre à cloche ou à membrane, afin d'y stocker un volume au moins égal à celui d'une des chambres 1₁ d'épuration ; ce remplissage est assuré grâce à la surpression créée dans le circuit 13 d'évacuation par la pompe 6 et un étranglement 13₁ situé avant ou dans la cheminée d'extraction 3, et après la dérivation 7₁, afin que la pression de refoulement de la pompe soit supérieure à celle de l'alimentation de l'air à épurer dans le circuit d'alimentation 14 ; l'air ayant rempli précédemment l'autre chambre 11 du réservoir 5 est alors chassé à travers le conduit 12 dans ledit circuit d'alimentation 14 ;
- avant l'inversion des circuits et du rôle des deux chambres 1 d'épuration, l'air épuré et stocké dans la chambre 10 du réservoir de stockage 5 en est chassé par ouverture de la vanne 7₂ et fermetures des vannes 7₁ et 14₁, et grâce à la dépression alors créée par la pompe 6 et transmise dans le circuit 14 ; l'air à épurer peut alors entrer par le conduit 12 dans la chambre 11 ; ainsi juste avant l'inversion des circuits entre les deux chambres 1 d'épuration et quand la chambre 10 est vidée, l'incinérateur ne contient plus que de l'air épuré ;
- on inverse alors les circuits en fermant la vanne d'alimentation 15₁ de la chambre 1₁ et en ouvrant celle d'évacuation 16_{1,} pendant que simultanément l'on ouvre la vanne d'alimentation 15₂ de la chambre 1₂ en fermant sa vanne d'évacuation 16₂ ; on rouvre également la vanne d'alimentation de l'incinérateur 14₁ et on ferme la vanne de chasse 7₂ de l'air épuré du réservoir 5 tout en ouvrant celle de remplissage 7₁ ; on notera ainsi que l'alimentation en air à épurer 4 n'est jamais arrêtée, ce qui ne perturbe pas la circulation de celui-ci et constitue un intérêt certain à un tel procédé et dispositif ;
- après cette inversion, l'air épuré en sortie de l'incinérateur est donc à nouveau dirigé, du fait de sa pression supérieure à cette alimentation 4, en partie dans la chambre 10 du réservoir 5 ; la cloison mobile ou cloche 8 en se déplaçant ou en se soulevant chasse l'air à épurer situé dans la chambre 11 dans le circuit principal d'alimentation 14 pour être épuré à son tour.

Dans l'éventualité où la température en sortie de la partie haute 18 d'une chambre d'épuration 1 est supérieure à 850°C environ, on injecte, dans cette partie haute, du gaz froid à épurer par la vanne 17 directement depuis le circuit d'alimentation 14 afin de diminuer la température avant que le gaz épuré parvienne au lit accumulateur de l'autre chambre d'épuration, et où il cède ses calories ; en contrôlant ainsi la température pour qu'elle soit inférieure à 850°C, on évite une surchauffe de l'incinérateur, ce qui pourrait être le cas quand la teneur des particules combustibles dans le gaz à épurer est élevée.

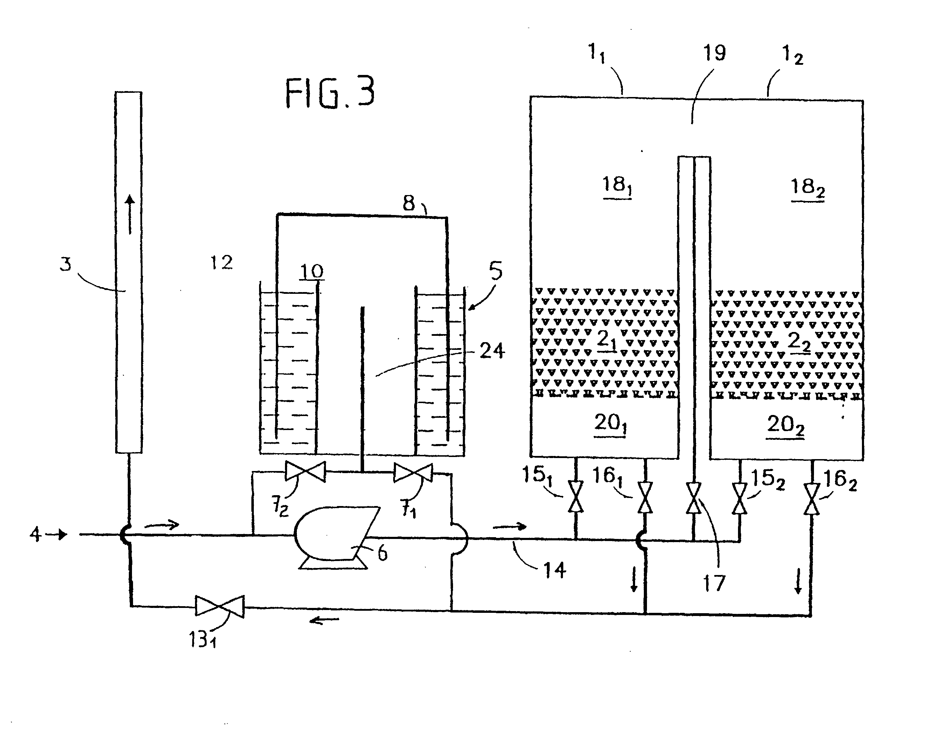

Suivant le mode de représentation de la figure 3 ledit réservoir tampon 5 est un gazomètre dans lequel ladite paroi mobile 8 est une cloche à joint hydraulique renversée dans la partie inférieure du réservoir 5 contenant du liquide 9, assurant l'étanchéité de l'intérieur de l'unique chambre 10 dudit réservoir. Ladite cloche renversée 8 est guidée latéralement par des patins de guidage anti-frottement contre les parois du réservoir ouvert 5 et comporte à sa partie inférieure un flotteur périphérique compensant son poids comme montré figure 2. L'alimentation et l'évacuation du gaz chargé résiduel et du gaz épuré provenant de la chambre d'épuration 1₁ dans la chambre 10 située sous la cloche 8 sont effectuées soit par un seul conduit 24 ou par deux conduits séparés, l'un relié à travers une vanne 7, au circuit d'évacuation 13 et l'autre par une vanne 7₂ au circuit d'alimentation 14.

Le procédé d'épuration thermique suivant la figure 3 est alors tel que
- pendant le cycle d'incinération, par exemple dans la chambre d'épuration 1₁ par ouverture de la vanne 15₁ depuis le circuit d'alimentation 14, les particules combustibles sont envoyées à l'aide d'une pompe aspirante refoulante de circulation 6 dans le lit accumulateur 2₁ préchauffé et sont brûlées dans la chambre de combustion 18₁ qui doit donc être maintenue à 800°C au moins ; l'air est envoyé ensuite dans la chambre de combustion 18₂ puis il cède ses calories au lit accumulateur 2₂ avant d'être évacué de la chambre d'épuration 1₂, par la vanne 16₂ ouverte dans le circuit d'évacuation 13.
- Puis on inverse les circuits et le rôle des deux chambres d'épuration 1₁ et 1₂, l'air chargé à épurer est envoyé dans la chambre d'épuration 1₂ par ouverture de la vanne d'alimentation 15₂ de ladite deuxième chambre et fermeture de la vanne d'alimentation 15₁ de ladite première chambre d'épuration,
- Simultanément on ferme la vanne 13₁ d'évacuation vers la cheminée 3 et on ouvre la vanne d'alimentation 7₁ du réservoir 5 et la vanne 16₁ d'évacuation de la première chambre d'épuration de sorte que le gaz chargé résiduel de la première chambre d'épuration 1₁ est envoyé dans la chambre 10 du réservoir 5 dont la paroi mobile 8 s'élève progressivement. Ceci permet de stocker le gaz chargé résiduel de la première chambre d'épuration 1₁ car la vanne 7₂ d'évacuation du réservoir 5 est fermée.
- Lorsque tout le gaz chargé résiduel de la chambre d'épuration 1₁ est stocké, c'est à dire lorsque le gaz épuré commence à arriver dans la chambre 10 du réservoir 5, on ouvre la vanne 13₁ de la cheminée 3, on ferme la vanne d'alimentation 7₁ du réservoir tampon 5 et on ouvre la vanne d'évacuation 7₂ du réservoir 5 de sorte que les gaz épurés en provenance de ladite première chambre 1₁ sont évacués dans la cheminée 3 et les gaz chargés résiduels stockés dans le réservoir 5 sont envoyés par la pompe 6 dans la deuxième chambre d'épuration 1₂ avec les gaz chargés à épurer 4. La paroi mobile 8 du réservoir tampon redescend. La deuxième chambre d'épuration se retrouve ainsi en fonctionnement stable.

L'arrivée du gaz épuré dans la chambre 10 peut être mise en évidence à l'aide d'un système de détection. Mais, il n'y a pas nécessairement un système de détection dans la mesure où les volumes et les temps de commutation peuvent être calculés avec une marge de sécurité pour être sûr que tout le gaz chargé résiduel de la chambre d'épuration 1 est bien passé dans la chambre 10.

Sur la figure 3 on a représenté un réservoir 5 délimité par le volume intérieur de deux cylindres coaxiaux. Cette structure permet de réduire le poids du réservoir tampon.

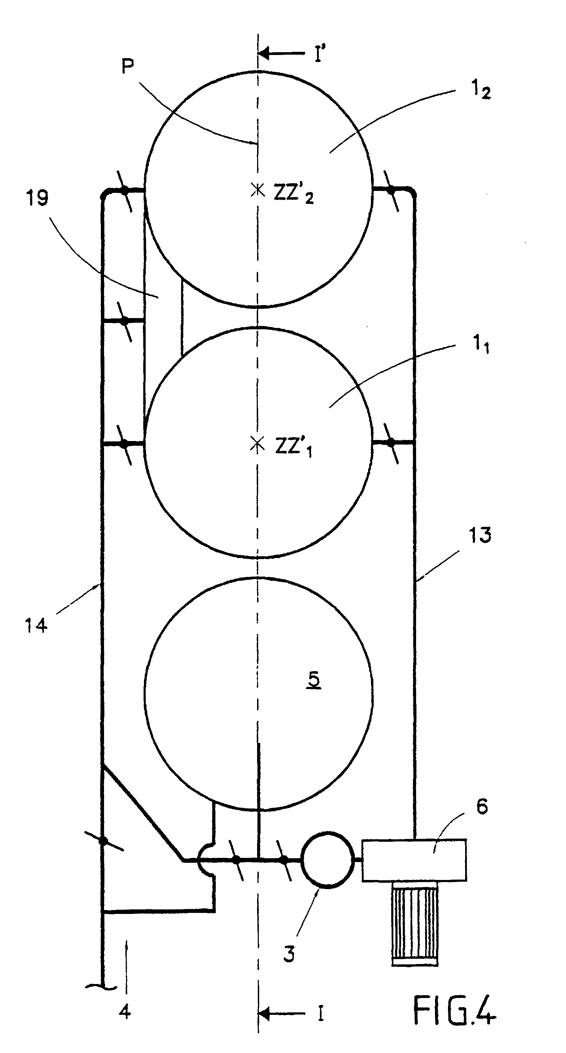

Suivant les modes de réalisation représentés dans les figures 4 à 7 jointes, l'incinérateur suivant l'invention comporte une chambre de combustion composée des deux parties cylindriques supérieures 18 situées au-dessus de chaque lit accumulateur 2 et de diamètres sensiblement identiques, reliées entre elles par un conduit 19 désaxé par rapport au plan "P" défini par les axes ZZ' desdites chambres 1 et induisant une rotation entre les deux dites parties 18₁ et 18₂ : ceci permet d'améliorer la turbulence et l'homogénéité de l'air à épurer et donc l'efficacité de la destruction des particules combustibles.

De plus pour aider à la mise en rotation de l'air en sortie du lit accumulateur 2, chaque chambre d'épuration 1 comporte dans leur partie haute 18₁ une cloison horizontale 21 située au-dessous dudit conduit 19 et traversée par une buse 22 désaxée par rapport à l'axe ZZ' de la chambre 1 ; laquelle buse 22 est inclinée par rapport à ladite cloison 21 horizontale de telle façon que son orifice débouchant au-dessus de celle ci soit dirigé dans la direction d'enroulement, autour dudit axe ZZ', définie par l'orifice du conduit 19 de liaison entre les chambres 1 pour que l'air qui y circule dans les parties hautes de celles ci y soit entraîné en tourbillonnant toujours dans le même sens ; lesdites buses 22 peuvent être de forme quelconque telle que cylindrique et de section par exemple circulaire.

A l'entrée de chaque buse 22, soit au niveau de leur orifice inférieur, est placé un brûleur 23 à combustible gazeux ou liquide permettant de réguler la température dans la chambre de combustion constituée par les deux parties supérieures 18₁ 18₂, et le conduit 19 de telle façon que cette température soit au moins de 800°C dans la buse 22 correspondante ; la position relative dudit brûleur 23 par rapport à cette buse 22 permet à la totalité de l'air à épurer d'être en contact avec la flamme.

Les lits accumulateurs de chaleur 2 sont ainsi situés entre deux caissons ou chambres, l'un en partie basse 20 et l'autre en partie supérieure 27 faisant partie de la chambre de combustion 18 : les volumes de ces caissons inférieurs 20 et supérieurs 27 doivent être suffisants pour permettre d'une part une répartition homogène de l'air à épurer avant de pénétrer dans le lit accumulateur 2 en évitant tout cheminement préférentiel, et d'autre part d'obtenir, pour ce qui concerne les caissons supérieurs 27, une température homogène du lit accumulateur de chaleur dans un plan transversal.

## Revendications

1. Procédé d'épuration thermique de gaz chargé de particules combustibles et utilisant deux chambres d'épuration (1) régénératrices contenant chacune un lit accumulateur de chaleur (2) tel qu'on injecte alternativement à travers un premier lit accumulateur (2₁) préalablement chauffé le gaz chargé de particules pour brûler celles ci, lequel gaz ainsi chauffé et épuré étant alors envoyé à travers un deuxième lit accumulateur (2₂) auquel il cède ses calories avant d'être évacué (3, 13) puis quand ce dit deuxième lit accumulateur est lui-même suffisamment chauffé, on inverse les circuits et le rôle des deux dits accumulateurs **caractérisé en ce qu'** en fin de cycle d'incinération dans la première chambre d'épuration on effectue l'épuration complète du gaz chargé résiduel de la première chambre d'épuration (1₁) comprenant ledit premier accumulateur après fermeture de l'alimentation en gaz chargé à épurer vers ladite première chambre d'épuration (1₁), en effectuant les étapes suivantes dans lesquelles :
- on stocke dans un réservoir tampon (5) à paroi mobile (8) du gaz en sortie desdites chambres d'épuration qui peut être :
• Soit le gaz chargé résiduel en sortie (16₁) dudit premier accumulateur (2₁), ledit gaz chargé stocké dans ledit réservoir tampon étant ensuite injecté dans ledit deuxième accumulateur après ou simultanément à l'inversion des circuits d'alimentation en gaz chargé et des rôles des deux dits accumulateurs,
• soit une partie du gaz épuré en sortie (16₂) dudit deuxième accumulateur (2₂) que l'on stocke dans une première chambre (10) à paroi mobile dudit réservoir (5), ainsi que le gaz chargé à épurer que l'on envoie dans une deuxième chambre (11) à paroi mobile (8) dudit réservoir tampon, ledit gaz épuré stocké dans ledit réservoir tampon (5) étant ensuite injecté dans ledit premier accumulateur (21), avant l'inversion des circuits d'alimentation en gaz chargé et les rôles des deux dits accumulateurs.

2. Procédé d'épuration thermique suivant la revendication 1 **caractérisé en ce qu'**en fin de cycle d'incinération dans la première chambre d'épuration, on effectue les étapes suivantes :
(a) on ferme l'arrivée (15₁) du gaz chargé à épurer vers ledit premier accumulateur (1₁),
(b) on stocke dans ledit réservoir tampon (5) à paroi mobile (8) le gaz chargé résiduel dudit premier accumulateur et,
(c) on injecte ledit gaz chargé résiduel stocké vers ledit deuxième accumulateur (1₂) après ou simultanément à l'inversion des circuits d'alimentation en gaz chargé et inversion des rôles entre les deux dits accumulateurs, de telle sorte que ledit gaz chargé résiduel soit chauffé à la température voulue et épuré.

3. Procédé d'épuration thermique suivant la revendication 2 **caractérisé en ce qu'**après fermeture de l'arrivée (15₁) du gaz chargé à épurer vers ledit premier accumulateur, on effectue les étapes suivantes :
(a1) on inverse les circuits d'alimentation en gaz chargé et les rôles entre les deux dits accumulateurs,
(b1) on stocke dans ledit réservoir tampon (5), après ou simultanément à l'étape (a1), le gaz en sortie (16₁) dudit premier accumulateur (1,) comprenant en premier lieu du gaz chargé résiduel dudit premier accumulateur (1₁) jusqu'à ce que du gaz épuré en sortie dudit premier accumulateur (1₁) commence à arriver dans ledit réservoir, et
(c1) on ferme (7₁) alors l'alimentation dudit réservoir tampon (5) et on évacue (13₁) le gaz épuré en sortie dudit premier accumulateur (1₁) vers une cheminée d'évacuation (3) et
(d1) on injecte, après ou simultanément à l'étape (c1), ledit gaz chargé résiduel stocké dans ledit réservoir (5) vers ledit deuxième accumulateur (1₂).

4. Procédé suivant la revendication 1 **caractérisé en ce que** :
(a) on stocke dans ledit réservoir tampon (5) une partie du gaz épuré en sortie du dit deuxième lit accumulateur (2₂) auquel il a cédé ses calories,
(b) on ferme (14₁) l'arrivée du gaz chargé à épurer vers lesdits accumulateurs (2),
(c) on injecte ledit gaz épuré et stocké dans le réservoir tampon (5) à travers ledit premier accumulateur (2₁) ayant permis de chauffer le gaz chargé de particules de telle sorte que le gaz chargé résiduel qui s'y trouve en soit chassé, chauffé à la température voulue et épuré, et
(d) on inverse les circuits d'alimentation en gaz chargé et en gaz épuré entre les deux dits accumulateurs afin d'inverser le rôle de ceux ci.

5. Procédé d'épuration thermique suivant la revendication 4 **caractérisé en ce que** lorsque l'on ferme (14₁) l'arrivée du gaz à épurer vers les chambres d'épuration (1), on envoie ce gaz à épurer dans une deuxième chambre (11) dudit réservoir tampon (5) dont ladite paroi mobile (8) la sépare d'une première chambre (10) dans laquelle a été stocké le gaz déjà épuré et qui en est ainsi chassé simultanément.

6. Incinérateur thermique de gaz chargé de particules combustibles comportant deux chambres (1) d'épuration régénératrices contenant chacune un lit accumulateur de chaleur (2), et reliées d'une part entre elles (19) et d'autre part alternativement au circuit (14) d'alimentation dudit gaz chargé de particules à épurer et à celui (13) d'évacuation du gaz une fois épuré **caractérisé en ce qu'**il comprend un réservoir tampon (5) à paroi mobile (8) relié alternativement soit au circuit d'évacuation (13) soit au circuit d'alimentation (14) desdites chambres d'épuration (1).

7. Incinérateur thermique suivant la revendication 6 utile notamment pour la mise en oeuvre du procédé des revendications 4 et 5, **caractérisé en ce que** ledit réservoir tampon (5) comprend deux chambres (10, 11) séparées par une paroi mobile (8) et dont la première (10) reçoit du gaz épuré depuis le circuit d'évacuation (13) pour le réinjecter ensuite dans le circuit d'alimentation (14), et la deuxième (11) reçoit simultanément, quand le gaz épuré est chassé de l'autre chambre (10), du gaz chargé de particules depuis le circuit d'alimentation (14) auquel elle est reliée (12) en amont de la liaison (72) avec l'autre chambre (10).

8. Incinérateur thermique suivant la revendication 6 utile notamment pour la mise en oeuvre des procédés des revendications 2 et 3 **caractérisé en ce que** ledit réservoir comprend une seule chambre (10) qui reçoit du gaz chargé résiduel depuis le circuit d'évacuation (13) desdites chambres d'épuration pour l'injecter ensuite dans le circuit d'alimentation (14) desdites chambres d'épuration.

9. Incinérateur thermique selon l'une quelconque des revendications 6 à 8 **caractérisé en ce que** ledit réservoir tampon (5) est un gazomètre dans lequel ladite paroi mobile (8) est une cloche renversée dans la partie inférieure du réservoir (5) contenant du liquide (9) assurant l'étanchéité d'une chambre (10) définie par l'intérieur de ladite cloche au-dessus dudit liquide.

10. Incinérateur selon l'une quelconque des revendications 7 ou 9 utile notamment pour les procédés des revendications 4 et 5 **caractérisé en ce que** ledit réservoir est un réservoir fermé de sorte que ladite cloche délimite les deux dites première et deuxième chambres du réservoir respectivement à l'intérieur et à l'extérieur de ladite cloche.

11. Incinérateur suivant l'une des revendications 8 ou 9 utile notamment pour le procédé des revendications 2 et 3 **caractérisé en ce que** ledit réservoir est un réservoir ouvert dans sa partie supérieure de sorte que ladite cloche délimite une seule chambre à l'intérieur de ladite cloche.

12. Incinérateur d'épuration thermique selon l'une quelconque des revendications 6 à 11 **caractérisé en ce que** ledit réservoir tampon (5) est apte à stoker un volume de gaz au moins égal à celui d'une chambre (1) d'épuration.

13. Incinérateur thermique selon l'une quelconque des revendications 6 à 12 **caractérisé en ce que** chaque chambre de combustion (1) est de forme cylindrique verticale comportant une partie basse (20) en dessous du lit (2) accumulateur de chaleur et dans laquelle le gaz à épurer est injecté pour traverser ledit lit accumulateur (2), et une partie haute (18, 27) au-dessus de ce lit (2) accumulateur, lesquelles parties hautes (18) sont reliées entre elles par un conduit (19) désaxé par rapport au plan "P" défini par les axes ZZ' desdites chambres (1).

14. Incinérateur thermique selon la revendication 13 **caractérisé en ce que** chaque chambre d'épuration (1) comporte dans sa partie haute (18) une cloison horizontale (21) située au-dessous dudit conduit (19) et traversée par une buse (22) désaxée par rapport à l'axe ZZ' de la chambre (1), laquelle buse (22) étant inclinée par rapport à ladite cloison (21) horizontale de telle façon que son orifice débouchant au-dessus de celle ci soit dirigé dans la direction d'enroulement, autour dudit axe ZZ' définie par l'orifice du conduit (19) de liaison entre les chambres (1) pour que le gaz qui y circule dans les parties hautes de celle ci y soit entraîné en tourbillonnant dans le même sens entre chaque orifice.

15. Incinérateur thermique selon la revendication 14 **caractérisé en ce qu'**il comporte au niveau de l'orifice inférieur de chaque buse (22) un brûleur (23).

16. Incinérateur thermique selon l'une quelconque des revendications 6 à 15 **caractérisé en ce que** les deux dites chambres d'épuration (1) et le réservoir tampon (5) sont de forme cylindrique, disposés verticalement et alignés sur un châssis commun.

## Claims

1. A method of thermally purging dirty gas laden with combustible particles, the method using two regenerative purge chambers (1) each containing a heat accumulator bed (2), with the particle-laden gas being injected alternately through a first previously-heated accumulator bed (2₁) to bum said particles, which gas, as heated and purged in this way, is then sent through a second accumulator bed (2₂) to which it yields its heat prior to being exhausted (3, 13), and then when said second accumulator is itself sufficiently heated, the circuits and the roles of said two accumulators are interchanged, the method being **characterized in that** at the end of the incineration cycle in the first purge chamber, the residual dirty gas of the first purge chamber (1₁) containing said first accumulator is purged completely after the closing the feed of dirty gas for purging to said first purge chamber (1₁), by performing the following steps:
· storing the gas at the outlet from said purge chambers in a buffer tank (5) having a moving wall (8), which gas may be:
· either the residual dirty gas at the outlet (16₁) of said first accumulator (2₁), said dirty gas stored in said buffer tank subsequently being injected into said second accumulator after or simultaneously with interchanging of the dirty gas feed circuits and the roles of said two accumulators;
· or else a portion of the purged gas at the outlet (16₂) from said second accumulator (2₂) which is stored in a first moving-walled chamber (10) of said tank (5), together with the dirty gas to be purged which is sent into a second moving-walled chamber (11) of said buffer tank, said purged gas stored in said buffer tank (5) subsequently being injected into said. first accumulator (2₁) prior to changing over the dirty gas feed circuits and the roles of said two accumulators.

2. A thermal purge method according to claim 1, **characterized in that** at the end of the incineration cycle in the first purge chamber, the following steps are performed:
a) closing the inlet (15₁) of dirty gas to be purged to said first accumulator (1₁);
b) storing the residual dirty gas of said first accumulator in said moving walled buffer tank (5); and
c) injecting said stored residual dirty gas into said second accumulator (1₂) after or simultaneously with changing over the dirty gas feed circuits and changing over the roles between said two accumulators in such a manner that said residual dirty gas is heated to the desired temperature and purged.

3. A thermal purge method according to claim 2, **characterized in that** after closing the inlet (15₁) of dirty gas for purging to said first accumulator, the following steps are performed:
a1) changing over the dirty gas feed circuits and the roles between said two accumulators;
b1) after or simultaneously with step a1), storing in said buffer tank (5) the gas at the outlet (16₁) of said first accumulator (1₁) comprising firstly the residual dirty gas of said first accumulator (1₁) until the purged gas at the outlet from said first accumulator (1₁) begins to penetrate in said tank;
c1)then closing (7₁) the feed to said buffer tank (5) and exhausting (13₁) the purged gas at the outlet from said first accumulator (1₁) to an exhaust chimney (3); and
d1) after or simultaneously with step c1), injecting said residual dirty gas stored in said tank (5) into said second accumulator (1₂).

4. A method according to claim 1, **characterized in that**;
a) storing in said buffer tank (5) a fraction of the purged gas at the outlet from said second accumulator bed (2₂) to which it has yielded its heat;
b) closing (14₁) the inlet of dirty gas for purging to said accumulators (2);
c) injecting said purged gas stored in the buffer tank (5) through said first accumulator (2₁) that has enabled the particle-laden gas to be heated, so that the residual dirty gas that is to be found therein is expelled, heated to the desired temperature, and purged; and
d) changing over the dirty gas feed circuits and purged gas feed circuits between said two accumulators in order to change over the roles thereof.

5. A thermal purge method according to claim 4, **characterized in that** when closing (14₁) the admission of gas for purging to the purging chambers (1), said gas for purging is sent into a second chamber (11) of said buffer tank (5) which chamber is separated by said moving wall (8) from a first chamber (10) in which the already-purged gas has been stored, thereby simultaneously expelling said already-purged gas.

6. A thermal incinerator for gas loaded with combustible particles, the incinerator comprising two regenerative purge chambers (1) each containing a respective heat accumulator bed (2), the chambers being connected firstly to each other (19) and secondly in alternation to the circuit (14) for feeding said gas loaded with particles for purging and to the circuit (13) for exhausting the gas once it has been purged, the incinerator being **characterized in that** it further comprises a buffer tank (5) having a moving wall (8), the buffer tank being connected alternatively either to the exhaust circuit (13) or to the feed circuit (14) of said purge chambers (1).

7. A thermal incinerator according to claim 6, usable in particular for implementing the method of claims 4 and 5, the incinerator being **characterized in that** said buffer tank (5) comprises two chambers (10, 11) separated by a moving wall (8), in which the first chamber (10) receives the purged gas from the exhaust circuit (13) for subsequent reinjection into the feed circuit (14), and, while the purged gas is being expelled from the other chamber (10), the second chamber (11) simultaneously receives gas that is laden with particles coming from the feed circuit (14) to which it is connected (12) upstream from the connection (72) with the other chamber (10).

8. A thermal incinerator according to claim 6, suitable in particular for implementing the methods of claims 2 and 3, the incinerator being **characterized in that** said tank comprises a single chamber (10) which receives the residual dirty gas from the exhaust circuit (13) of said purged chambers in order subsequently to inject it into the feed circuit (14) of said purge chambers.

9. A thermal incinerator according to any one of claims 6 to 8, **characterized in that** said buffer tank (5) is a gasometer in which said moving wall (8) is a downwardly-open bell in the bottom portion of the tank (5) containing the liquid (9) that seals a chamber (10) defined by the inside of said bell above said liquid.

10. An incinerator according to claim 7 or claim 9, suitable in particular for the methods of claims 4 and 5, **characterized in that** said tank is a closed tank so that said bell defines said first and second chambers of the tank respectively inside and outside said bell.

11. An incinerator according to claim 8 or-claim 9, suitable in particular for the method of claims 2 and 3, **characterized in that** said tank is a tank having an open top portion such that said bell defines a single chamber inside said bell.

12. A thermal purge incinerator according to any one of claims 6 to 11, **characterized in that** said buffer tank (5) is suitable for storing a volume of gas that is not less than the volume of a purge chamber (1).

13. A thermal incinerator according to any one of claims 6 to 12, **characterized in that** each combustion chamber (1) is in the form of a vertical cylinder having a bottom portion (20) beneath the heat accumulator bed (2) into which the gas for purging is injected so as to pass through said accumulator bed (2), and a top portion (18, 27) above said accumulator bed (2), which top portions (18) are connected to each other by a duct (19) offset away from the plane "P" defined by the axes ZZ' of said chambers (1).

14. A thermal incinerator according to claim 13, **characterized in that** each purge chamber (1) has in its top portion (18) a horizontal partition (21) situated beneath said duct (19) and having a nozzle (22) passing therethrough, the nozzle being offset from the axis ZZ' of the chamber (1), which nozzle (22) is inclined relative to said horizontal partition (21) in such a manner that its orifice opening out above the partition is directed in the winding direction about said axis ZZ' as defined by the orifice of the connection duct (19) between the chambers (1) so that the gas flowing therein in the top portions thereof is entrained so as to swirl in the same direction between each orifice.

15. A thermal incinerator according to claim 14, **characterized in that** it includes a burner (23) at the bottom orifice of each nozzle (22).

16. A thermal incinerator according to any one of claims 6 to 15, **characterized in that** said two purge chambers (1) and the buffer tank (5) are cylindrical in shape, being disposed vertically and in alignment on a common support structure.

## Patentansprüche

1. Verfahren zum thermischen Reinigen von mit brennbaren Bestandteilen beladenem Gas unter Verwendung von zwei regenerativen Reinigungskammern (1), die jeweils ein Wärmespeicherbett (2) aufweisen, in der Art, dass das mit Bestandteilen beladene Gas abwechselnd durch ein vorher aufgeheiztes Wärmespeicherbett (2₁) gepresst wird, um die Bestandteile zu verbrennen, wobei das auf diese Weise erhitzte und gereinigte Gas durch ein zweites Wärmespeicherbett (2₂) geleitet wird, an das das Gas seine Wärme abgibt, bevor es abgeleitet (3, 13) wird, und dass anschließend, wenn dieses zweite Wärmespeicherbett seinerseits ausreichend aufgeheizt ist, die Kreisläufe und die Funktion der zwei Wärmespeicher umgekehrt werden,
**dadurch gekennzeichnet, dass** am Ende des Verbrennungszyklus in der ersten Reinigungskammer das beladene Abgas der mit dem ersten Wärmespeicher versehenen ersten Reinigungskammer (1₁) nach Sperren der Zufuhr des zu reinigenden beladenen Gases zur ersten Reinigungskammer (1₁) durch Ausführen der folgenden Schritte vollständig gereinigt wird:
- In einem Pufferbehälter (5) mit beweglicher Zwischenwand (8) wird aus den Reinigungskammern austretendes Gas gespeichert, bei dem es sich
• entweder um das aus dem ersten Wärmespeicher (21) austretende (16₁) beladene Abgas handeln kann, wobei das in dem Pufferbehälter gespeicherte beladene Gas nach oder während der Umkehrung der Kreisläufe zur Zufuhr des beladenen Gases und der Funktionen der zwei Wärmespeicher anschließend in den zweiten Wärmespeicher gepresst wird,
• oder um einen Teil des aus dem zweiten Wärmespeicher (2₂). austretenden (16₂) gereinigten Gases, das in einer ersten Kammer (10) mit beweglicher Zwischenwand des Behälters (5) gespeichert wird, sowie um das zu reinigende beladene Gas, das in eine zweite Kammer (11) mit beweglicher Zwischenwand (8) des Pufferbehälters geleitet wird, wobei das in dem Pufferbehälter (5) gespeicherte gereinigte Gas anschließend vor der Umkehrung der Kreisläufe zur Zuruhr des beladenen Gases und der Funktionen der zwei Wärmespeicher in den ersten Wärmespeicher (21) gepresst wird.

2. Verfahren zur thermischen Reinigung nach Anspruch 1,
**dadurch gekennzeichnet, dass** am Ende des Verbrennungszyklus in der ersten Reinigungskammer die folgenden Schritte ausgeführt werden:
(a) Die Zufuhr (15₁) des zu reinigenden beladenen Gases zu dem ersten Wärmespeicher (1₁) wird gesperrt,
(b) in dem Pufferbehälter (5) mit beweglicher Zwischenwand (8) wird das beladene Abgas des ersten Wärmespeichers gespeichert, und
(c) das gespeicherte beladene Abgas wird nach oder während der Umkehrung der Kreisläufe zur Zufuhr des beladenen Gases und Umkehrung der Funktionen der zwei Wärmespeicher zu dem zweiten Wärmespeicher (1₂) gepresst, so dass das beladene Abgas auf die gewünschte Temperatur erhitzt und gereinigt wird.

3. Verfahren zum thermischen Reinigen nach Anspruch 2,
**dadurch gekennzeichnet, dass** nach Sperren der Zufuhr (15₁) des zu reinigenden beladenen Gases zum ersten Wärmespeicher die folgenden Schritte ausgeführt werden:
(a1) Die Kreisläufe zur Zufuhr des beladenen Gases und die Funktionen werden zwischen den zwei Wärmespeichern umgekehrt,
(b1) das aus dem ersten Wärmespeicher (1₁) austretende (16₁) Gas wird in dem Pufferbehälter (5) nach oder während des Schritts (a1) gespeichert, der zunächst beladenes Abgas des ersten Wärmespeichers (1₁) aufweist, bis aus dem ersten Wärmespeicher (1₁) austretendes gereinigtes Gas allmählich in den Behälter gelangt, und
(c1) die Zuleitung des Pufferbehälters (5) wird gesperrt, und das aus dem ersten Wärmespeicher (1₁) austretende gereinigte Gas wird zu einem Abzugsschornstein (3) abgeleitet, und
(d1) das in dem Behälter (5) gespeicherte beladenen Abgas wird nach oder während des Schritts (c1) zu dem zweiten Wärmespeicher (1₂) gepresst.

4. Verfahren nach Anspruch 1, **dadurch gekennzeichnet, dass**
(a) in dem Pufferbehälter (5) ein Teil des aus dem zweiten Wärmespeicherbett (2₂) austretenden gereinigten Gases gespeichert wird, das seine Wärme an dieses abgegeben hat,
(b) die Zufuhr des zu reinigenden beladenen Gases zu den Wärmespeichern (2) gesperrt (14₁) wird,
(c) das in dem Pufferbehälter (5) gespeicherte, gereinigte Gas derart durch den ersten Wärmespeicher (2₁) gepresst wird, der das mit Bestandteilen beladene Gas aufzuheizen vermochte, dass das noch darin befindliche beladene Abgas ausgestoßen wird, nachdem es auf die gewünschte Temperatur erhitzt und gereinigt ist, und
(d) die Kreisläufe zur Zufuhr des beladenen Gases und des gereinigten Gases zwischen den zwei Wärmespeichern umgekehrt werden, um die Funktion der beiden umzukehren.

5. Verfahren zur thermischen Reinigung nach Anspruch 4,
**dadurch gekennzeichnet, dass** beim Sperren (14₁) der Zufuhr des zu reinigenden Gases zu den Reinigungskammern (1) das zu reinigende Gas in eine zweite Kammer (11) des Pufferbehälters (5) geleitet wird, dessen bewegliche Zwischenwand (8) diese von einer ersten Kammer (10) trennt, in der das bereits gereinigte Gas gespeichert wurde, das somit gleichzeitig ausgestoßen wird.

6. Anlage zur Verbrennung von mit brennbaren Bestandteilen beladenem Gas, mit zwei regenerativen Reinigungskammern (1), die jeweils ein Wärmespeicherbett (2) aufweisen und einerseits miteinander (19) und andererseits abwechselnd mit dem Kreislauf (14) zur Zufuhr des mit Bestandteilen beladenen, zu reinigend Gases und mit dem Kreislauf (13) zur Ableitung des schließlich gereinigten Gases verbunden sind,
**dadurch gekennzeichnet, dass** sie einen Pufferbehälter (5) mit beweglicher Zwischenwand (8) umfasst, der abwechselnd entweder mit dem Ableitungskreislauf (13) oder mit dem Zuleitungskreislauf (14) der Reinigungskammem (1) verbunden ist.

7. Verbrennungsanlage nach Anspruch 6, insbesondere zur Durchführung des Verfahrens aus Anspruch 4 und 5 geeignet,
**dadurch gekennzeichnet, dass** der Pufferbehälter (5) zwei Kammern (10, 11) umfasst, die durch eine bewegliche Zwischenwand (8) voneinander getrennt sind, von denen die erste (10) gereinigtes Gas durch den Ableitungskreislauf (13) erhält, um dieses anschließend wieder in den Zuleitungskreislauf (14) zurückzuführen, und die zweite (11) gleichzeitig während des Ausstoßens des gereinigten Gases aus der anderen Kammer (10) mit Bestandteilen beladenes Gas durch den Zuleitungskreislauf (14) erhält, mit dem sie hinter der Verbindung (7₂) zu der anderen Kammer (10) verbunden (12) ist.

8. Verbrennungsanlage nach Anspruch 6, insbesondere zur Durchführung der Verfahren aus Anspruch 2 und 3 geeignet,
**dadurch gekennzeichnet, dass** der Behälter eine einzige Kammer (10) umfasst, die durch den Ableitungskreislauf (13) der Reinigungskammern beladenes Abgas erhält, um dieses anschließend in den Zuleitungskreislauf (14) der Reinigungskammern einzupressen.

9. Verbrennungsanlage nach einem der Ansprüche 6 bis 8,
**dadurch gekennzeichnet, dass** der Pufferbehälter (5) ein Gasbehälter ist, bei dem die bewegliche Zwischenwand (8) eine im unteren Teil des Behälters (5) auf dem Kopf stehende, Flüssigkeit (9) enthaltende Glocke ist, die die Dichtigkeit einer Kammer (10) gewährleistet, die durch den Innenraum der Glocke oberhalb der Flüssigkeit gebildet wird.

10. Verbrennungsanlage nach einem der Ansprüche 7 oder 9, insbesondere zur Durchführung der Verfahren aus Anspruch 4 und 5 geeignet,
**dadurch gekennzeichnet, dass** der Behälter ein Behälter ist, der in der Weise geschlossen ist, dass die Glocke die zwei Kammern des Behälters, d.h. die erste und die zweite Kammer, innerhalb bzw. außerhalb der Glocke begrenzt.

11. Verbrennungsanlage nach einem der Ansprüche 8 oder 9, insbesondere zur Durchführung des Verfahrens aus Anspruch 2 und 3 geeignet,
**dadurch gekennzeichnet, dass** der Behälter ein Behälter ist, der in seinem oberen Teil in der Weise geöffnet ist, dass die Glocke eine einzige Kammer innerhalb der Glocke begrenzt.

12. Verbrennungsanlage nach einem der Ansprüche 6 bis 11,
**dadurch gekennzeichnet, dass** der Pufferbehälter (5) ein Gasvolumen zu speichern vermag, das wenigstens dem einer Reinigungskammer (1) entspricht.

13. Verbrennungsanlage nach einem der Ansprüche 6 bis 12,
**dadurch gekennzeichnet, dass** jede Brennkammer (1) eine senkrechte zylindrische Form hat und einen unteren Teil (20) unterhalb des Wärmespeicherbetts (2) aufweist, in den das zu reinigende Gas zum Durchqueren des Wärmespeicherbetts (2) eingepresst wird, sowie einen oberen Teil (18, 27) oberhalb des Wärmespeicherbetts (2), wobei die oberen Teile (18) durch einen Kanal (19) miteinander verbunden sind, der bezüglich der durch die Achsen ZZ' der Kammern (1) gebildeten Ebene "P" seitlich versetzt ist.

14. Verbrennungsanlage nach Anspruch 13,
**dadurch gekennzeichnet, dass** jede Reinigungskammer (1) in ihrem oberen Teil (18) eine horizontale Trennwand (21) umfasst, die unter dem Kanal (19) angeordnet ist und von einer Düse (22) durchquert wird, die bezüglich der Achse ZZ' der Kammer (1) seitlich versetzt ist, wobei die Düse (22) in Bezug auf die horizontale Trennwand (21) so geneigt ist, dass ihre oberhalb der Trennwand mündende Öffnung in die sich um die Achse ZZ' windende Richtung weist, die von der Öffnung des Verbindungskanals (19) zwischen den Kammern (1) bestimmt wird, damit das dort in deren oberen Bereichen zirkulierende Gas zwischen jeder Öffnung in gleicher Richtung in schnelle, kreisende Bewegung versetzt wird.

15. Verbrennungsanlage nach Anspruch 14,
**dadurch gekennzeichnet, dass** sie in Höhe der unteren Öffnung jeder Düse (22) einen Brenner (23) umfasst.

16. Verbrennungsanlage nach einem der Ansprüche 6 bis 15,
**dadurch gekennzeichnet, dass** die zwei Reinigungskammern (1) und der Pufferbehälter (5) zylinderförmig, vertikal und auf einem gemeinsamen Gestell in einer Reihe angeordnet sind.
